# EUROPEAN PATENT APPLICATION

(11) **EP 1 329 251 A1**
(43) Date of publication of application: **23.07.2003**
(21) Application number: 01972524.1
(22) Date of filing: 27.09.2001
(51) Int. Cl.: B01D 24/46

(54) **FILTER MEDIUM WASHING METHOD AND FILTER**

(30) Priority: 29.09.2000 JP 2000336696
(71) Applicant: Takara Kogyo Kabusiki Kaisha, Ohta-ku, Tokyo 143-0015 (JP)
(72) Inventor: TAKARABE, Takashi, Takara Kogyo Kabusiki Kaisha, Ohta-ku, Tokyo 143-0015 (JP)
(74) Representative: Muschke, Markus, Dipl.-Phys.
(86) International application number: JP0108421
(87) International publication number: WO02028503

(57) **Abstract**

A multi-layer filter, wherein a filter medium inside a rotatable or swingable horizontal drum (3) is formed in a multi-layer shape with a single or a combined grading, specific gravity, and characteristic of filter medium desirably according to the purpose of treatment and washed with raw water while rubbing the filter medium by rorating or swinging the drum (3) so that contaminent can be removed to surely recover the filter medium at each layer, a raw water inflow tube (5) and a filtered water outflow tube (7) are formed in a shape of double-pipe, a sandproof means and a filter medium agitating means are installed on both or either of the tubes, and a cleaning means and an adhesion prevention means for preventing seaweed from adhering to the inside wall of the drum (3) are installed between a filter net (15) and the inside wall of the drum (3), whereby a structure can be simplified, controllability and maintainability can be facilitated, production cost and maintenance cost can be reduced, and durability and filtering efficiency can be increased.

## Description

### TECHNICAL FIELD

The present invention relates to a filter medium washing method and a filter, and more particularly to a filter medium washing method with a filter provided with a rotatable or swingable horizontal drum and for purifying raw water by allowing it to pass through filter bed composed of filter medium in the drum, and the same filter.

### BACKGROUND ART

Generally, a filter for purifying pond water, swimming pool water, bath water, domestic drainage, industrial drainage, food industry drainage and the like by collecting contaminant contained therein through a specific filter medium has been well known and as an apparatus for cleaning the filter medium of such a filter, there is an apparatus which washes the filter medium with backwash by feeding washing water and air with a pressure from a floor bottom on which the filter medium is deposited and agitating. However, the above-described washing method with the filter has various problems to be solved. This includes insufficient removal of contaminant adhering to the filter medium, requirement of a large amount of washing water and time are necessary, and complicated and large washing apparatus.

Japanese Patent Laid-open No. Hei 8-318110 has disclosed a multi-layer filter having multi-layered filter mediums, which belongs to the stationary type filter and in this multi-layer filter, washing water is spouted to the surface of each layer to wash the filter medium. Further, as one of the aforementioned multi-layer filters, an apparatus in which back flow washing water and air are fed with a pressure from the bottom of a floor on which the filter mediums are deposited and agitated so as to wash the filter mediums has been well known conventionally. However, these multi-layer filters have such problems which should be solved. The examples are inability to restore the function of the filter after washing of the filter medium, insufficient removal of contaminant adhering to the filter medium, requirement of a large amount of washing water and time, and a complicated and large washing apparatus.

Accordingly, the inventors of the present invention have proposed a filter which enables the filter medium to be washed sufficiently by providing with a filter net, achieves simplified structure and small size, and in which filtering performance thereof is improved (see Japanese Patent Publication No. Sho-61-41246). Further, they have proposed another filter in which filtering efficiency is improved by increasing the area of the filter net, contaminant adhering to the filter net can be separated and removed by rubbing the filter medium with the filter net at the time of back washing and sufficient washing is achieved with washing water of about one-fifth of water used in a conventional stationary type filter (Japanese Patent Nos. 3177882 and 3177883).

However, because these filters aim at mainly improving the filtering efficiency so that back washing treatment is necessary, pipe structure and the like become complicated and automating of the apparatus is necessary, so that there are produced new problems that the apparatus is difficult to handle, and production cost and maintenance cost increase and the like.

The present invention has been achieved in views of the above-described problems and it is an object of the present invention to provide a filter medium washing method which ensures a sufficient filter medium washing capacity, low production cost and maintenance cost and ease of handling, and a filter. Another object of the present invention is to provide a filter having a high filtering efficiency, and capable of being reduced in size and maintaining its filtering performance for a long term.

### DISCLOSURE OF THE INVENTION

To achieve the above object, according to the invention in claim 1, a filter medium washing method for a filter including a rotatable or swingable horizontal drum in which raw water is filtrated by passing through filter medium in the drum, is characterized in that the filter medium is washed with raw water or washing water while the filter mediums are rubbed with each other by rotating or swinging the drum.

With such a structure, contaminant adhering to the filter medium can be released effectively and the contaminant released from the filter medium can be removed.

To achieve the above object, a filter according to the invention in claim 2 is provided with a filter including a rotatable or swingable horizontal drum in which filter bed and space portion are formed vertically inside, a raw water inflow tube which is inserted into the space portion from an axial portion of the drum while a raw water inflow portion is located in the space portion, and a filtrated water outflow tube which is inserted into the space portion from the axial portion of the drum while a filtrated water outflow portion is located in a filter bed. The filter is characterized in that a raw water inflow tube supporting the drum and a filtrated water outflow tube having a selector valve capable of selecting treated water or drainage are further provided.

With such a structure, the filter structure is simplified thereby achieving reduction of the size of the filter.

To achieve the above object, a filter according to the invention in claim 3 is provided with a rotatable or swingable horizontal drum in which filter bed and space portion are formed vertically inside, a raw water inflow tube which is inserted into the space portion from an axial portion of the drum while a raw water inflow portion is located in the space portion, and a filtrated water outflow tube which is inserted into the space portion from the axial portion of the drum while a filtrated water outflow portion is located in a filter bed. The filter is characterized in that a single or multiple filter mediums are formed in the form of a single layer or multiple layers by selecting the grading, specific gravity, characteristics and the like of the filter medium depending on a treatment purpose.

With such a structure, a single filter medium or multiple filter mediums are formed in the form of a single layer or multiple layers by selecting the grading, specific gravity, characteristics and the like of the filter medium depending on treatment purpose, thereby improving the filter performance and filtering efficiency of the filter.

To achieve the above object, a filter according to the invention in claim 4 is characterized in that the filter medium is formed of multiple ones having different specific gravities.

With such a structure, the respective filter mediums can be classified according to a difference in specific gravity.

To achieve the above object, a filter according to the invention in claim 5 is characterized in that a partition net for separating respective filter mediums is imposed between the respective filter mediums constituted of multi-layers.

With such a structure, the respective filter mediums can be separated more reliably.

To achieve the above object, a filter according to the invention in claim 6 is characterized in that a space is secured above each partition net so as to allow the respective filter mediums to remain.

With such a structure, when the drum is rotated or swung, the filter mediums of respective layers partitioned by the partition plates are rubbed with each other effectively so as to release contaminant adhering to the filter medium.

To achieve the above object, a filter according to the invention in claim 7 is characterized in that a water tube which is capable of switching between a raw water inflow portion, a wastewater drain portion, or washing water discharge portion depending on a requirement is disposed in the space portion, inside the respective filter mediums constituted of multi-layers, or above part or all of the filter mediums partitioned with the partition nets, and a water tube which is capable of switching between a filtrated water outflow portion, washing water inflow portion, and wastewater drain portion depending on a requirement is disposed inside the filter bed, or in a space between the filter medium and bottom portion of the filter bed.

Such a structure allows accommodation to diversified treatment purposes.

To achieve the above object, a filter according to the invention in claim 8 is characterized in that a partition plate for forming a space is disposed below the partition net for separating the respective filter mediums and communication between respective spaces is achieved through a water pipe.

With such a structure, the respective filter mediums can be separated and restored reliably and further, communication between the spaces in the respective filter mediums is achieved. Therefore, repetitive filtration is realized allowing accommodation to more diversified treatment purposes.

To achieve the above object, a filter according to the invention in claim 9 is provided with a rotatable or swingable horizontal drum in which filter bed and space portion are formed vertically inside, a raw water inflow tube which is inserted into the space portion from an axial portion of the drum while a raw water inflow portion is located in the space portion, and a filtrated water outflow tube which is inserted into the space portion from the axial portion of the drum while a filtrated water outflow portion is located in a filter bed. The filter is characterized in that the filtrated water outflow tube is connected to an intake port of a pump.

With such a structure, such an event that contaminant in the raw water is destroyed with pump vanes to small particles is eliminated, so that collection of contaminant with the filter medium is facilitated and further, because of a negative pressure within the tank, pressure resisting strength can be set lower thereby the weight of the tank being reduced.

To achieve the above object, a filter according to the invention in claim 10 is characterized in that a pipe or a solid shaft is disposed on one side of the drum while one or two pipes or triple pipes on the same axis are disposed internally on the other side thereof, in a condition that they are fixed to both sides or one side of the drum or in a rotary type following the drum, such that these pipes are used as the raw water inflow tube, the filtrated water outflow tube, filtrated water pipe, or drainage pipe according to requirement.

Such a structure allows accommodation to diversified application purposes with a simple structure.

To achieve the above object, a filter is characterized in that according to the invention in claim 11, a sandproof means is provided in one of the raw water inflow tube, the drainage pipe and filtrated water outflow tube, the double tubes, and the triple tubes, at least on one side of the inside and outside the drum.

With such a structure, the filter medium can be prevented from invading a sliding section of the bearing supporting the drum.

To achieve the above object, a filter according to the invention in claim 12 is characterized in that the raw water inflow tube, the drainage pipe and filtrated water outflow tube, the double tubes, or the triple tubes are provided with a manual or driven type agitating device or an agitating member which is located inside the drum and rotates integrally with the drum.

With such a structure, contaminant adhering to the filter medium can be released and removed effectively.

To achieve the above object, a filter according to the invention in claim 13 is characterized in that the filtrated water outflow portion of the filtrated water outflow tube is wound with wire while covered with net in the filter bed, so as to form filter net, this filter net being rotated integrally with the drum.

With such a structure, when the drum is rotated, the net moves on the wire so that the net repeats contraction and expansion so as to clean that portion, thereby achieving more efficient filtration.

To achieve the above object, a filter according to the invention in claim 14 is characterized in that a plate-like filter net is provided in the filter bed, this filter net being rotated integrally with the drum and communicating with the filtrated water outflow portion of the filtrated water outflow tube.

With such a structure, more reliable filtration can be achieved.

To achieve the above object, a filter according to the invention in claim 15 is characterized in that a cleaning means for removing contaminant and an adhesion preventing means for preventing adhesion of contaminant between the filter net such as a plate-like wedge wire or the like and the inner wall of the drum.

With such a structure, maintenance interval can be prolonged so that maintenance of the apparatus is facilitated.

To achieve the above object, according to a filter according to the invention in claim 16 is characterized in that a filter net such as a sheet-like wedge wire or the like, which is rotated integrally with the drum and communicates with the raw water inflow tube, whose raw water inflow portion is located in the space portion, is provided within the filter bed, a cleaning means for removing a primary filtering means and contaminant, and an adhesion preventing means for preventing adhesion of contaminant are provided between the sheet-like filter net and the inner wall of the drum.

With such a structure, more reliable filtration can be achieved, maintenance interval can be prolonged and maintenance of the apparatus is facilitated.

### BRIEF DESCRIPTION OF DRAWINGS

FIG. 1 is an explanatory diagram showing the operation principle and operating procedures of a filter according to the present invention;
FIG. 2 is a schematic diagram of a drum axial plane for explaining the operation principle of the filter according to the present invention;
FIG. 3 is an explanatory diagram showing an embodiment of the filter according to the present invention;
FIG. 4 is a schematic diagram for explaining various examples of pipe arrangement of the filter according to the present invention;
FIG. 5 is an explanatory diagram showing another embodiment of the filter according to the present invention;
FIG. 6 is a perspective view showing an agitating means of the filter according to the present invention;
FIG. 7 is a sectional view of major portions of other embodiment of the filter according to the present invention;
FIG. 8 is a sectional view of major portions of various embodiments of the filter according to the present invention;
FIG. 9 is an explanatory diagram showing another embodiment of the filter according to the present invention;
FIG. 10 is an explanatory diagram showing another embodiment of the filter according to the present invention;
FIG. 11 is an explanatory diagram showing another embodiment of the filter according to the present invention;
FIG. 12 is a schematic diagram of an axial plane showing the multi-layer condition of the filter medium in the filter according to the present invention;
FIG. 13 is a schematic diagram of axial plane of major portions showing a state in which a partition net is provided between layers of filter medium composed of multi-layers in the filter according to the present invention;
FIG. 14 is a schematic diagram of axial plane of major portion showing another embodiment of the filter according to the present invention;
FIG. 15 is a schematic diagram of axial plane of major portion showing another embodiment of the filter according to the present invention;
FIG. 16 is a schematic diagram of axial plane of major portions showing a state in which mixed filter medium is provided in multi-layers of the filer of the present invention;
FIG. 17 is a schematic diagram of axial plane of major portions showing another embodiment in which the mixed filter medium is provided in multi-layers of the filter according to the present invention;
FIG. 18 is a schematic diagram of axial plane of major portions showing a state in which the mixed filter medium is provided in multi-layers while a partition net and a partition plate are disposed between layers, of the filter according to the present invention;
FIG. 19 is a diagram showing schematically water passages in the filter according to the present invention;
FIG. 20 is a schematic diagram showing various examples of pipe arrangement of the filter according to the present invention; and
FIG. 21 is a diagram showing a wedge wire as filter net in the filter according to the present invention.

### BEST MODE FOR CARRYING OUT THE INVENTION

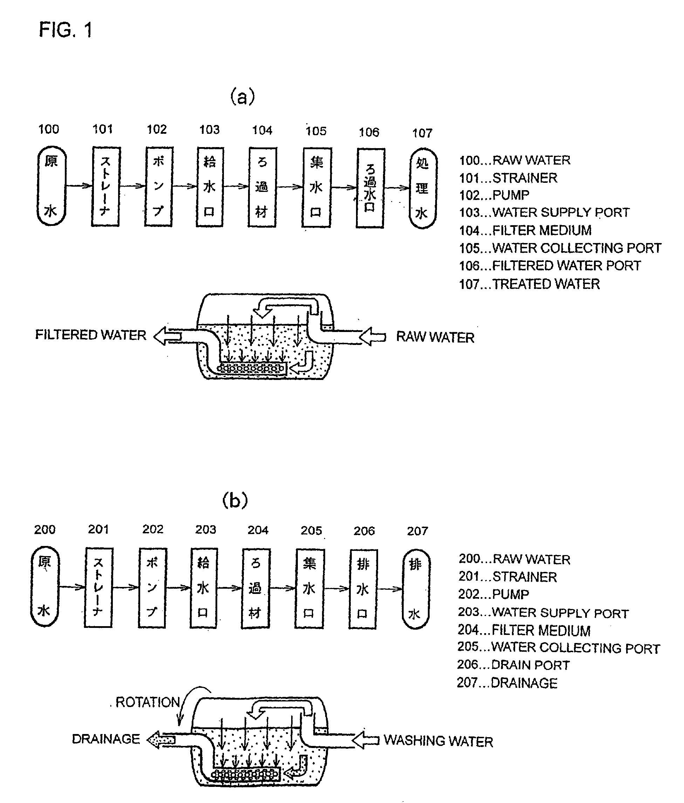

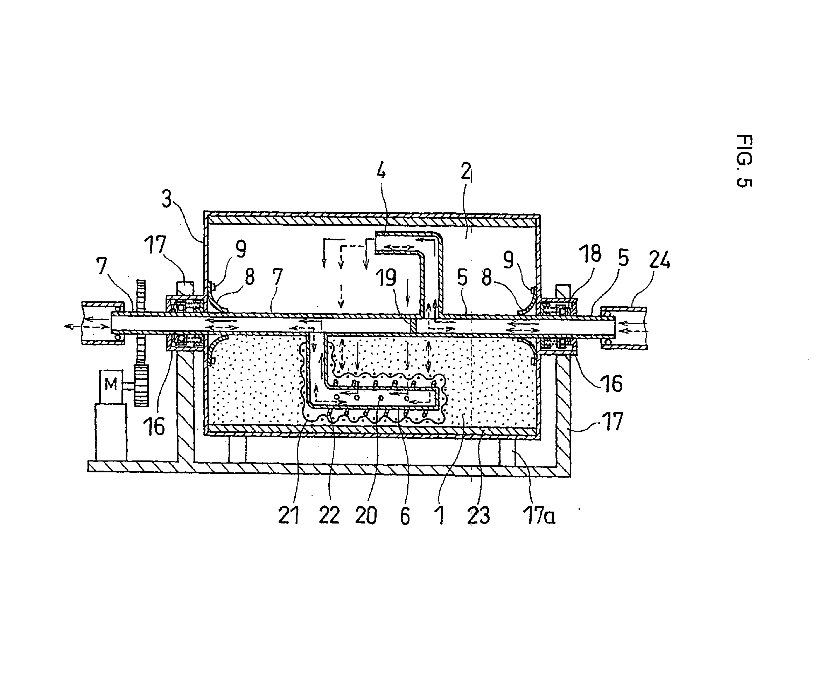

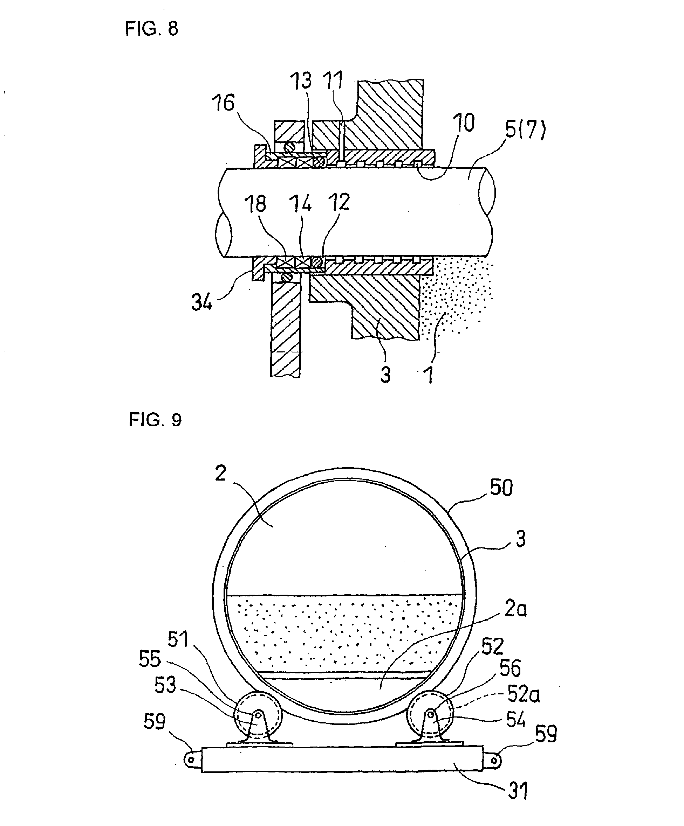

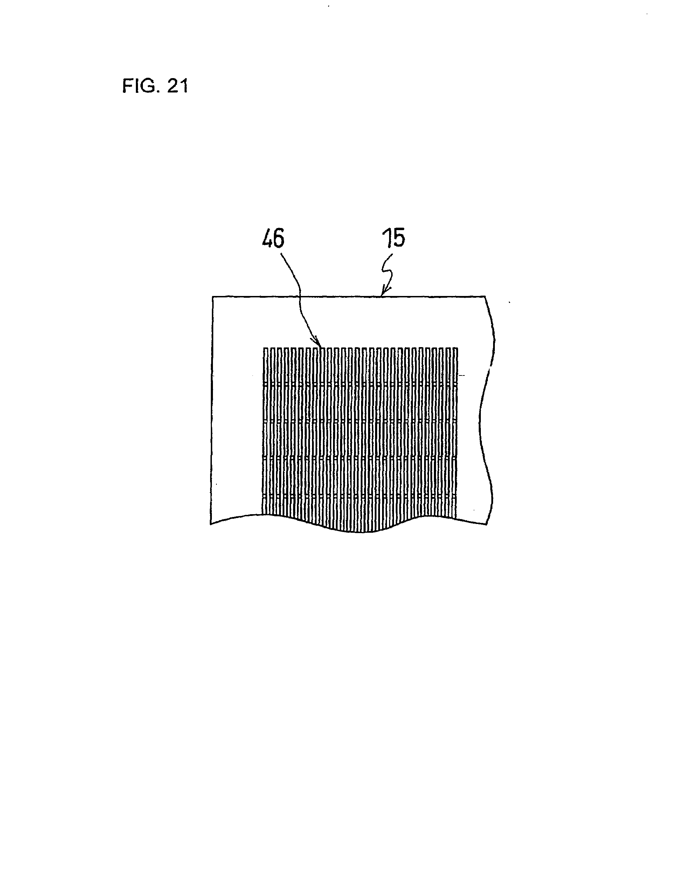

First, an embodiment of the filter according to the present invention will be described in detail with reference to FIGS. 1-21. A filter shown in FIG. 5 will be described in detail. This filter includes a horizontal drum 3 in which a filter bed 1 composed of granular filter medium and a space portion 2 are disposed vertically inside, a raw water inflow tube 5 which passes from outside of the drum 3 through its axial portion while a raw water inflow portion 4 is located in the space portion 2, and a filtrated water outflow tube 7 which passes from outside of the aforementioned drum 3 through its axial portion while a filtrated water outflow portion 6 is located in the filter bed 1. The aforementioned raw water inflow tube 5 and the filtrated water outflow tube 7 are provided rotatably within the drum 3 through respective bearings 16, 16. The rotations of the raw water inflow tube 5 and the filtrated water outflow tube 7 are driven by a motor M and in this case, the drum 3 is supported rotatably by a pair of rails 17a or rollers 51, 52 (see FIG. 9).

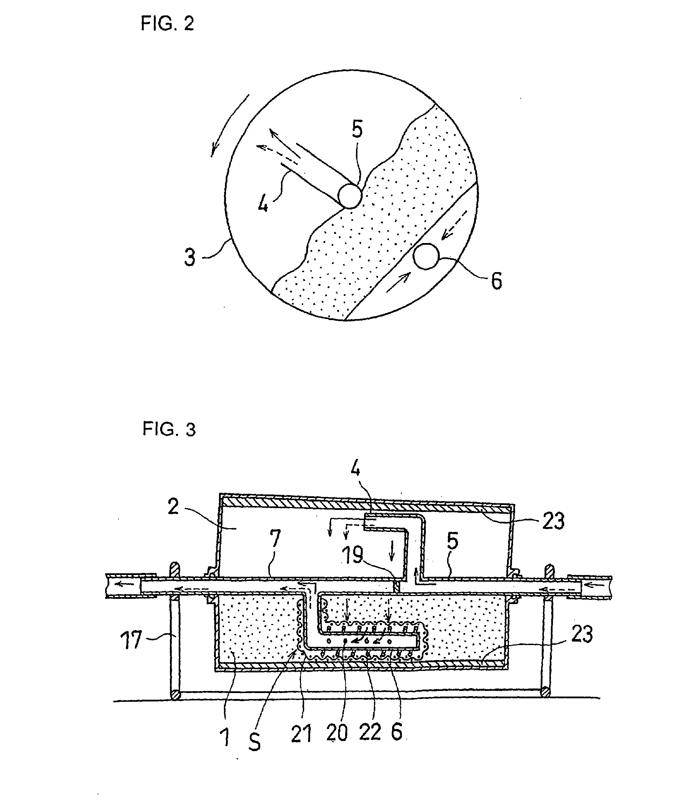

As shown in FIGS. 3, 7, 9, 10 and 11, the drum 3 may be supported rotatably with a pedestal. An example of its supporting structure will be described in detail with reference to FIG. 9. At least one row, preferably, two rails 50 are provided on an outer periphery of the drum 3 and the rail 50 is supported by guide groove rollers 51, 52, preferably, having a pair of guide grooves 51a, 52a for guiding the same rail. The guide groove rollers 51, 52 are mounted rotatably on substantially U-shaped frames 53, 54 through shafts 55, 56. These frames 53, 54 are mounted on a base 19 by welding in such a manner that the rail 50 is put between them. In the meantime, it is permissible to form the rail 50 in a concave shape and the roller in a convex shape.

Then, the drum 3 is rotated with the raw water inflow tube 5 and the filtrated water outflow tube 7 located coaxially with the rotary shaft of the drum 3 as a rotary shaft by the motor M. The bearing of this rotary shaft is supported with a gland packing 18 having an O-ring, a mechanical seal or the like. As shown in FIG. 5, parts of the raw water inflow tube 5 and the filtrated water outflow tube 7 extending on the axis of the rotary shaft of the drum 3 are formed of the same pipe, which is partitioned with a partition member 19 at a substantially central portion.

Because in the filter according to the present invention, either the raw water inflow tube 5 and the filtrated water outflow tube 7 or the drum 3 may be rotated, an axial portion for supporting the rotation of the drum 3 includes both of them. Further, in the filter according to the present invention, the raw water inflow tube 5 and the filtrated water outflow tube 7 may be formed of independent tubes by bending each tube at a specific position. As shown in FIGS. 3, 5 and 7, the filtrated water outflow portion 6 of the filtrated water outflow tube 7 has a plurality of filtrated water ports 20. This portion is covered with a filter net 21 and a sliding contact member 22 in contact with an inner surface of the filter net 21 at the time of washing the filter medium is provided between the filter net 21 and the aforementioned portion. The sliding contact member 22 is formed of spiral member wound around a portion in which the plurality of the filtrated water ports 20 are provided or a number of annular linear members. A strainer S is constituted of the filtrated water outflow portion 6, the filter net 21 and the sliding contact member 22.

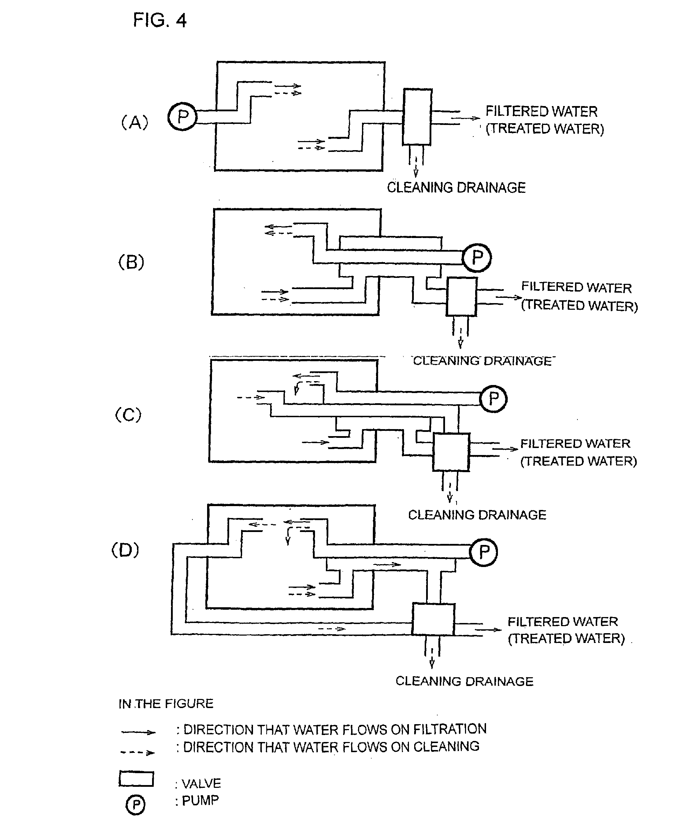

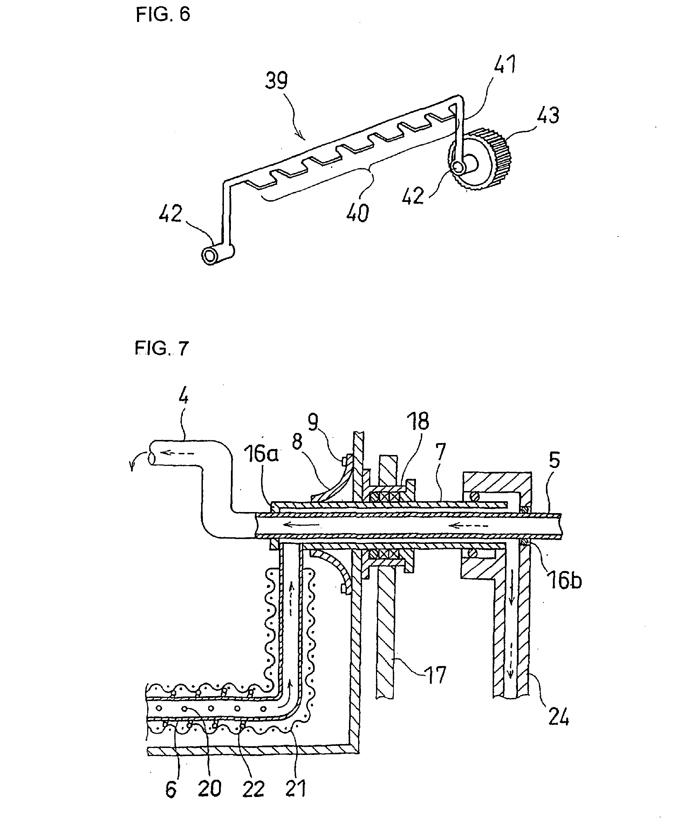

While respective tubes are fixed to both side faces or a single side face of the drum 3, the drum 3 is rotated. While a tube or a solid shaft is provided on one side face, one tube (see FIG. 4(B)) or two tubes (see FIG. 4(C)) (hereinafter referred to as double tubes) or triple tubes (if a further tube is disposed coaxially with the raw water inflow tube 5 and the filtrated water outflow tube 7 shown in FIG. 7, rotary structure is achieved) are provided at specified positions in the tube serving as axis on the other side face. As shown in FIG. 4(B), these tubes serve as the raw water inflow tube (serving for raw water and washing water inflow at the same time) and the filtrated water outflow tube (serving for filtrated water and drainage at the same time). As shown in FIG. 4(C), the filtrated water tube and the drainage pipe may be provided independently. Although a selector valve is provided in the examples shown in FIGS. 4(A)-(D), it is permissible to provide with individual tubes dependently and abolish the selector valve.

Further, it is permissible to locate a discharge port of raw water or washing water from a pump so as to oppose an inflow port of drainage as shown in FIG. 4(D) and feed part of the raw water or washing water to the drainage pipe under a pressure so as to exert a pump action like an ejector pump. Then, the raw water inflow tube 5 which supports the drum 3 and a tube for discharging filtrated water and drainage provided with a selector valve capable of switching between treated water and drainage are provided. Further, as shown in FIG 3, an agitating means is formed by providing a plurality of agitating members 23 in parallel to respective water tubes on an inner peripheral face of the drum 3, so as to help agitating motion of the granular filter medium during a rotation of the drum 3. As for the agitating means, in an agitating device 39 mounted on the raw water inflow tube 5 or the filtrated water outflow tube 7 and the double tube or the triple tube, as shown in FIG. 6, a plurality of agitating spatulas 40 are disposed on an arm 41 and that arm 41 is supported by the respective tubes acting as an axis of the rotary shaft of the drum 3 and the filter medium is agitated by the agitating device 39 by rotating a gear 43 with a motor (not shown).

In the rotary shaft of the drum 3 as shown in FIG. 7, the filtrated water outflow tube 7 is supported by the raw water inflow tube 5, which runs through the filtrated water outflow tube 7, through the bearings 16a, 16b and an annular sandproof packing 8 is mounted on the filtrated water outflow tube 7 within the drum 3. The raw water inflow tube 5 is supported by a supporting frame 17 through the gland packing 18 containing an O-ring or a mechanical seal attached to the filtrated water outflow tube 7. This provides a structure for preventing granular filter medium from flowing into the gland packing 18 through the respective tubes when the filter is washed. Preferably, the annular sandproof packings 8, 8 are mounted on each tube within the drum 3 or it is permissible to form the sandproof packing 8 made of synthetic rubber, flexible synthetic resin or the like and fix this on a side wall of the drum 3 with bolts 9 or the like via metallic washers. More preferably, dustproof agent such as Thiabendazole (registered trademark) is mixed in the sandproof packing 8 or applied thereto in order to protect the sandproof packing 8 from adhesion of seaweed.

Because, in this case, the raw water inflow tube 5 runs through a side wall of a pipe 24, it is natural that this portion is sealed with an O-ring or the like. Although not shown, a solid shaft for supporting the drum 3 is rotatably provided on the other side of the drum 3. Further, it is permissible to fix the drum 3 and then rotate the filtrated water outflow tube 7. The fixed pipe 24 or hose is attached to the raw water inflow tube 5 and the filtrated water outflow tube 7 through an O-ring or the like, so that if any sandproof means such as an O-ring, mechanical seal or labyrinth structure is provided on either the bearing or the water supply tube, filter medium can be prevented from invading the bearing.

Further, as shown in FIG. 8, it is permissible to form a supply port 11, which extends into the drum 3 and supplies grooves with fresh water for the raw water inflow tube 5 and the filtrated water outflow tube 7 acting as an axis of a shaft for supporting a rotation of the drum 3 or the bearing 16, by making labyrinth (groove) 10 disposed outside the drum 3. In this case, if a pump is operated to supply fresh water synchronously with the rotation of the drum 3, it is possible to save fresh water and eliminate waste of driving power. Further, a concave groove 12 is provided in the vicinity of the supply port 11 for the labyrinth (groove) of the bearing 16 and an O-ring 13 is engaged in that concave groove 12. In the bearing 16, a mechanical seal 14, the gland packing 18, a gland presser 34 and the like are disposed and then, the supporting frame 17 is mounted on the bearing 16. A combination of the sandproof packing and O-ring, sandproof packing and mechanical seal or a means for supplying the groove with fresh water while extending the labyrinth groove into the drum 3 and the O-ring may be selected appropriately depending on a treatment purpose.

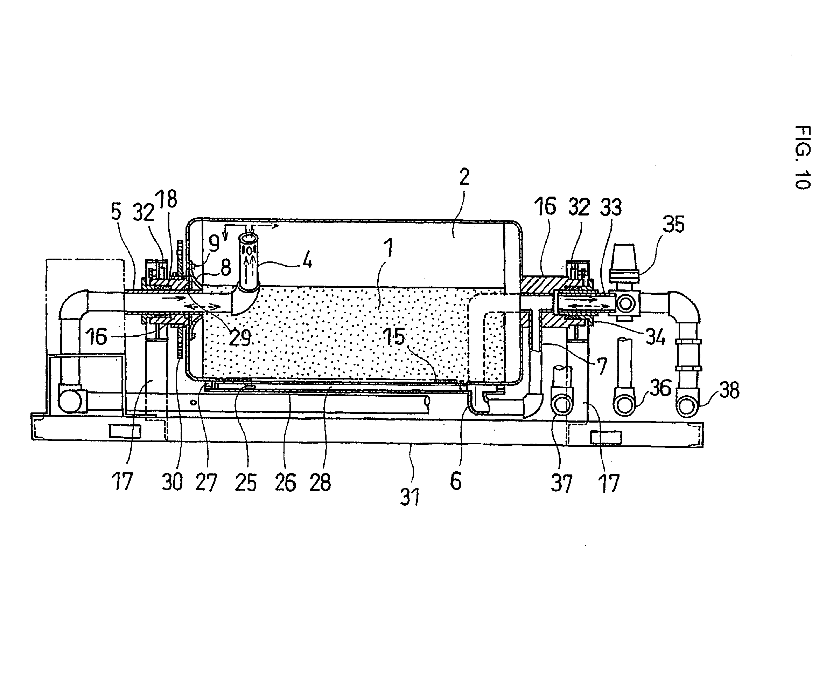

Next, the filer shown in FIG. 10 will be described in detail. The same reference numerals as the above-described filter indicate the same components or similar ones. In this filter, for example, a filter net 15, such as a metallic net, punching metal or the like is fixed directly or through a flange or the like by welding, bonding or the like in the filter bed 1 of the horizontal drum 3, and preferably, joined to an entire face of a lid 26 by welding or the like through substantially square shaped members disposed on four corners of the lid 26 or a flange 27 or attached to the inner face of the filter bed 1 or the lid 26 detachably with bolts and nuts 44 so as to form the strainer S. The filter net 15 is provided so as to be substantially flush with the inner face of the drum 3 through the aforementioned substantially square shaped member or the flange 27. A gap 28 between the filter net 15 and the lid 26 is so structured to communicate with the filtrated water outflow portion 6 in order to collect filtrated water passing through the filter medium or allow washing water (or raw water, hereinafter referred to as washing water) to pass. The lid 26 is mounted on the drum 3 detachably with bolts and nuts.

The filter net 15 is wedge wire, which is, preferably, formed by disposing a plurality of slits 46 in a sheet material. In the meantime, the wedge wire, which is a filter net 15 provided on the lid 26 and its inner face, may be formed to match a curved face of the drum 3. Further, only the filter net 15 may be flat or horizontal. Further, it is permissible to mix the dustproof agent in the filter net 15 and the lid 26 or apply the agent thereon or it is permissible to place a brush 25 which the dustproof agent is mixed in or applied to in the gap 28 between the filter net 15 and the lid 26 for use as a cleaning means for the back side of the filter net 15 or a seaweed adhesion preventing means.

The drum 3 and the raw water inflow tube 5 are so constructed that the raw water inflow tube 5 is engaged with the bearing 16 through the dust seal 29, the gland packing 18 and the like and that the bearing 16 is fixed to an end wall of the drum 3. The bearings 16 are supported by both supporting frames 17, 17 erected on the base 31, through three cam followers 32 distributed on the supporting frames 17, 17 at every 120 degrees in terms of angular phase differential. A gear sprocket 30 (or pulley on which a belt is wound), which rotates integrally with the bearing 16, is mounted on the bearing 16 and by rotating the gear sprocket 30 with a motor (not shown), the drum 3 is rotated.

A cam (not shown), which makes a sliding contact with a cam switch, is provided at a specified position of the drum 3 and the rotation of the drum 3 is stopped based on a detection signal of the cam switch such that the filtrated water outflow portion 6 having the filter net 15 is located on the bottom. The above-described mechanism may detect such a position that the filtrated water outflow portion 6 is located on the bottom with a sensor (not shown) or the rotation angle phase of a rotating bearing or the like with an encoder in order to stop the rotation of the drum 3 at a position that the filtrated water outflow portion 6 is located on the bottom. A dust seal 29, a gland packing 18, a gland presser 34 and the like exist between the fixed pipe 33 (see FIG. 10) communicating with the filtrated water outflow tube 7 and the bearing 16. As shown in FIG. 10, a valve control 35 for supplying raw water or filtrated water selectively is provided at a specified position of the pipe. Reference numeral 36 in FIG. 10 denotes a raw water intake port, reference numeral 37 denotes a treated water outlet and reference numeral 38 denotes a drain port.

By providing an entire inner peripheral face of the drum 3 with a substantially sheet-like filter net 15, filtering efficiency can be further improved. Although not shown, it is permissible to close an opening portion of the raw water inflow portion 4 disposed in the space portion 2 with a plug or the like in order to spray water from a side wall of the raw water inflow portion 4 or provide the raw water inflow portion 4 on an entire length of the drum 3. If an internal piping indicated with dotted line is arranged such that the filtrated water outflow tube 7 is disposed out of the drum 3 (both the raw water inflow tube 5 and the raw water inflow portion 4 can be disposed outside), the entire width of the inside of the tank 3 can be utilized. The tank 3 may be swung by normal/reverse rotation of the motor (not shown) or with a rack and pinion mechanism comprised of a pinion gear (not shown) provided on the drum 3 and a rack gear which reciprocates. Further, the aforementioned sandproof means may be constructed by providing with the substantially sheet-like filter net 15. Further, it is permissible to provide the filter bed 1 and the space portion 2 with the filter net 15 such as a sheet-like wedge wire, which rotates integrally with the horizontal drum 3 and communicates with the filtrated water outflow portion 6 so as to divide the interior of the drum 3 into two sections.

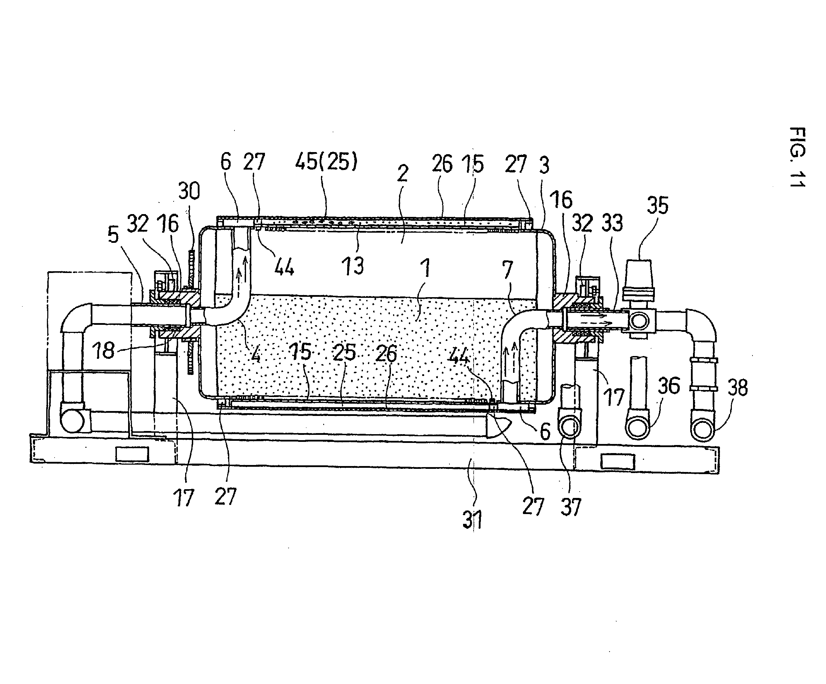

It is permissible to provide with the filter net 15 such as the sheet-like wedge wire communicating with the filtrated water outflow portion 6 as shown in FIG. 11 to divide the interior of the drum 3 into three sections and fix the right and left portions so that they rotate integrally with the bearings 16. In the meantime, the same reference numerals as the filter shown in FIG. 10 indicate the same components or similar ones and description thereof is omitted. Then, it is permissible to impose the brush 25 (rotating brush, scrubbing brush, sponge or the like) between the filter net 15 and the inner peripheral face of the drum 3 as a cleaning means and an adhesion preventing means for preventing adhesion of seaweed or it is permissible to impose water quality improving material 45 such as ceramics and tourmaline pellet having particle size larger than the outside diameter of a hole in the filter net 15 so as to perform primary filtration, preventing adhesion of deposit, corrosion and the like and removal thereof.

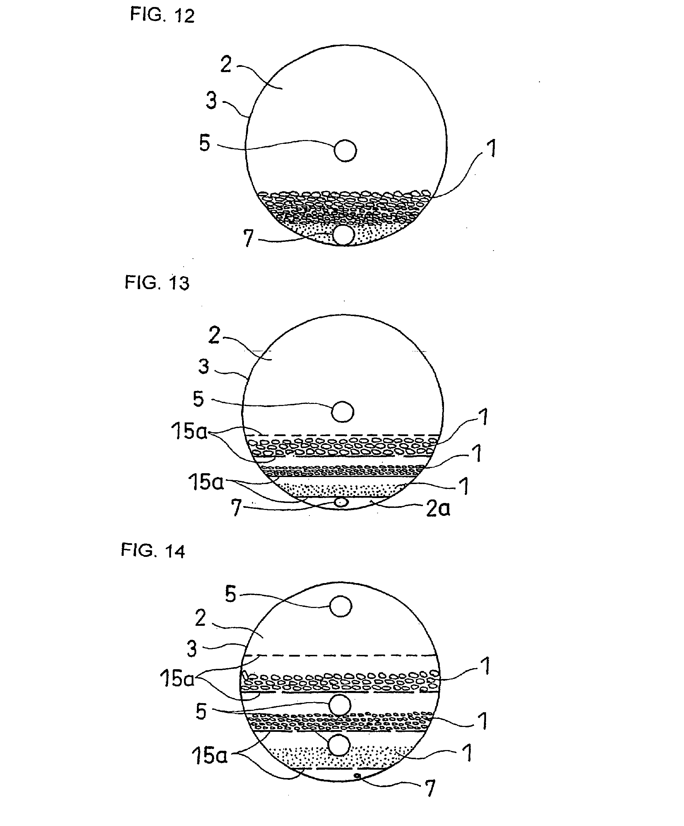

Next, the filter shown in FIGS. 12-20 will be described in detail. The same reference numerals as the above-described filter in a description below indicate the same components or similar ones. FIGS. 12-18 are diagrams showing the structure of the filter bed 1 with an axial plane of the drum 3 and the filter bed 1 is constituted of multiple layers composed of filter medium having different specific gravity, for example, sand, gravel, anthracite, garnet, ceramics, ion exchange resin and activated charcoal. The filter, including the horizontal drum 3 in which the filter bed 1 composed of filter medium and the space portion 2 are disposed vertically therein, the raw water inflow tube 5 which is passed through the axial portion from outside the drum 3 while the raw water inflow portion 4 is located in the space portion 2, and the filtrated water outflow tube 7 which is passed through the axial portion from outside the drum 3 while the filtrated water outflow portion 6 is located in the filter bed 1, contains a single layer or multi-layers by selecting grading, specific gravity, characteristics and the like of the filter medium depending on treatment purpose. The filter medium is constituted with a single layer or multiple mixed layers by selecting the grading, specific gravity, characteristics and the like of the filter medium depending on the treatment purpose and more preferably, respective filter medium is formed of filter mediums having different specific gravity and classified.

In the filter according to the present invention, individual filter mediums rub with each other or the individual mediums rub with not only each other but also the filter net 15 as a result of rotation and swinging under mechanical force of the filter bed 1 composed of multiple layers and gravitation. Consequently, contaminant adhering to the individual filter mediums is released and removed effectively so that a specified washing can be achieved with the quantity of washing water 20-35% of the conventional stationary type filter and additionally, the individual filter mediums can be classed successively from medium having a low specific gravity to a medium having a high specific gravity. Further, the individual filter mediums are blocked from being mixed completely by providing with a partition net 15a for separating respective filter medium layers completely in order to keep a filter bed 1 corresponding to a treatment purpose, thereby improving treatment efficiency. In this case, it is preferred that the individual filter mediums remain while a space is kept above the filter mediums.

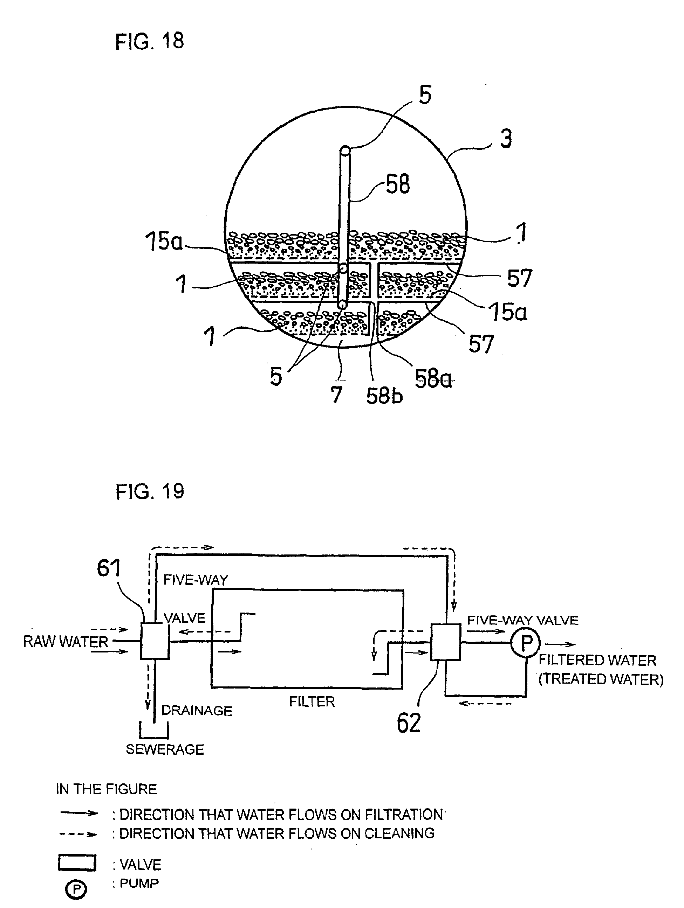

As shown in FIGS. 12 and 13, preferably, the raw water inflow tube 5 capable of switching between the raw water inflow portion, the wastewater drain portion, or the washing water discharge portion with a selector valve 61 (see FIG. 19) is disposed in the space portion 2 and the filtrated water outflow tube 7 capable of switching between the filtrated water outflow portion, the washing water inflow portion, or the washing water discharge portion with a selector valve 62 (see FIG. 19) is disposed within the filter bed 1 or in a space 2a between the filter medium and the bottom of the filter bed 1. Further, if the multi-layer filer mediums are formed such that the grading decreases toward the lower layers depending on treatment purpose as shown in FIGS. 14-16 and 18, treated water filter speed can be adjusted by selecting a layer for use for filtration. Further, it is permissible to dispose the raw water inflow tube 5 capable of selecting the raw water inflow portion, the wastewater drain portion or the washing water discharge portion inside the respective filter mediums of multi-layers or in part or all of spaces above each of the respective filter mediums of multi-layer partitioned by a partition net 15a.

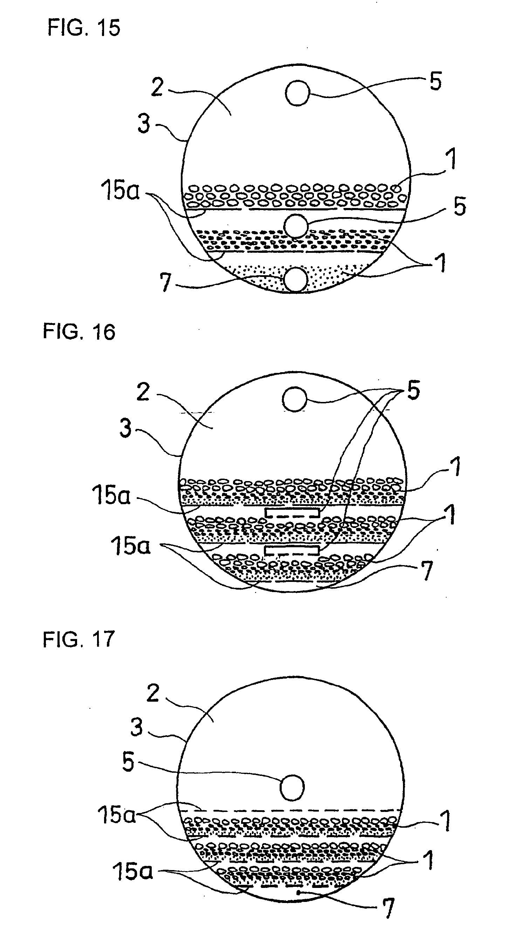

As shown in FIG. 15, it is permissible to dispose the filtrated water outflow tube 7 capable of switching between the filtrated water outflow portion, the washing water inflow portion or the washing water drain portion inside the filter medium on the bottommost. As shown in FIG. 16, it is permissible to form the raw water inflow tube 5 in a flat form. Further, as shown in FIG. 18, it is permissible to provide a partition plate 57 having no hole entirely below the partition net 15a for separating the respective filter mediums of multi-layers so as to form a space between the partition net 15a and the partition plate 57 or support the raw water inflow tube 5 provided in part or all of the space above the respective filter mediums with a water passage pipe 58 such that it is located in space portions of the respective filter mediums or connect a water passage pipe 58a having communication holes 58b for communicating with a space between the partition net 15a and the partition plate 57 to each partition plate 57 of each filter medium or achieve communication between the partition plate 57 above and the partition net 15a with a desired number of the water passage pipes 58a. Further, the installation positions of the respective water passage pipes 58a may be matched or shifted relative to each other when viewed on paper of FIG. 18. Further, it is permissible to connect the water to the filtrated water outflow tube 7 from each filter medium through the partition net 15a, the water passage pipe 58a and the communication hole 58b.

Because the filter according to the present invention has such partition plates 57, independent filtration can be carried out by the respective filter mediums so as to increase treatment capacity and further, because the water passage pipe 58a makes communication between the respective filter mediums, repeated filtration can be carried out, so as to meet a treatment purpose. As shown in FIG. 13, 14 and 17, the partition net 15a may be provided above the filter medium on the topmost. Further, the respective filter mediums of multi layers may be composed of a single kind of filter medium or mixed filter mediums (see FIGS. 16 and 18).

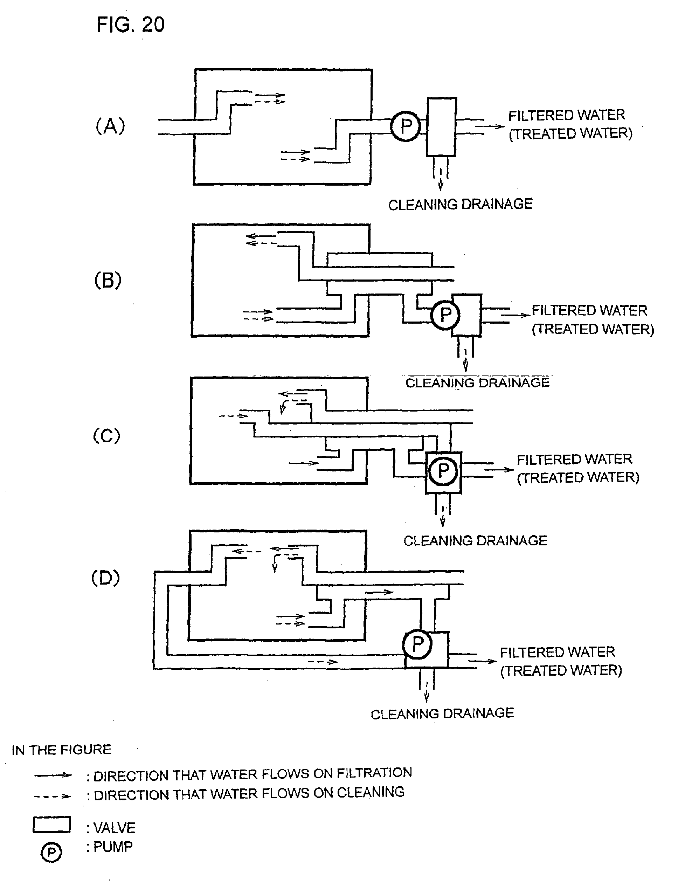

As shown in FIGS. 19 and 20, in the filter according to the present invention, a suction port of the pump P for filtrated water outflow or drainage discharge may be connected to the drum 3 having the filter bed 1. In this case, raw water can be supplied to the drum 3 not through the pump and therefore, contaminant in the raw water is never destroyed by pump vanes (rotary vane) to fine sections but that contaminant can be kept in the form of a large mass so that the contaminant can be caught effectively with the filter medium. Further, because a negative pressure is generated in the drum 3, pressure resistant strength of the drum 3 can be set to low levels, thereby leading to reduction of apparatus weight.

If it is specified that back wash (washing with washing water in an opposite direction to raw water) is executed as shown in FIG. 19, washing water is supplied from a discharge port of the pump P into the drum 3 and because the filter is opened at the time of back washing, pressure inside the drum 3 does not rise. Further, contaminant in raw water (washing water) is preferred to be destroyed with pump vanes. Raw water may be supplied into the drum 3 from a raw water storage tank (not shown) installed at a position higher than the drum 3 through an inflow tube. If the raw water storage tank or the like is installed at a place lower than the drum 3, it is permissible to prime the drum 3 or install an auxiliary pump for raw water supply, which is used only at the time of pump startup.

Further, the multi-layer filter can employ a structure in which the raw water inflow tube 5 and the filtrated water outflow tube 7 are mounted rotatably inside the drum 3 through a bearing, a strainer structure provided on the filtrated water outflow tube 7, structures of the raw water inflow tube 5 and the filtrated water outflow tube 7, structures of various sandproof means, a structure of partition net such as wedge wire (partition net is used because this has an operation as a filter net and further, an operation of partitioning respective filter mediums in a filer containing a multi-layered filter bed), a specific means for a cleaning means and an adhesion preventing means, a primary filtration means, a cleaning means and an adhesion preventing means appropriately and a description thereof is omitted because the same has been described in detail about the filter shown in FIGS. 3-10.

Although the filter has been described about an example in which this back washing is not carried out, the back washing can be utilized in the multi-layer filter. As for its structure, the direction indicated with an arrow of dotted line in FIG. 10 is inverted and the selector valve is constructed just using a three-way valve or a five-way valve. Thus, a description thereof is omitted. A following system can be considered as the operating system of the filter bed 1 and its internal mechanism of the multi-layer filter.
a. The filter bed 1 does not rotate or swing except at the time of bask washing. The raw water inflow portion 4 and the filtrated water outflow portion 6 do not rotate or swing with the filter bed 1 at the time of back washing.
b. The filter bed 1 does not rotate or swing except at the time of back washing. The raw water inflow portion 4 does not rotate or swing with the filter bed 1 at the time of back washing and the filtrated water outflow portion 6 rotates or swings with the filter bed 1.
c. The filter bed 1 does not rotate or swing except at the time of back washing. The raw water inflow portion 4 and the filtrated water outflow portion 6 rotate or swing with the filter bed 1 at the time of back washing.
d. The filter bed 1 rotates or swings with forward washing (raw water and washing water are supplied in the same direction) only without back washing. The raw water inflow portion 4 and the filtrated water outflow portion 6 do not rotate or swing with the filter bed 1.
e. The filter bed 1 rotates or swings with only forward washing without back washing. The raw water inflow portion 4 does not rotate or swing with the filter bed 1 at the time of washing, but the filtrated water outflow portion 6 rotates or swings with the filter bed 1.
f. The filter bed 1 rotates or swings with only forward washing without back washing. The raw water inflow portion 4 and the filtrated water outflow portion 6 rotate or swing with the filter bed 1 at the time of washing.
g. The filter bed 1 does not rotate or swing at the time of forward washing or back washing and both the raw water inflow portion 4 and the filtrated water outflow portion 6 or only the filtrated water outflow portion 6 rotates or swings.

Next, the operation of the filter shown in FIG. 10 will be described. When this is used as an ordinary filter, as shown in FIG. 1(a), raw water flows in from the raw water intake port 36 and flows out to the drain port 38 through the raw water inflow tube 5, the raw water inflow portion 4, the space portion 2, the surface of the filter bed 1, the filter 1, substantially flat plane like filter net 15, the filtrated water outflow portion 6 and the filtrated water outflow tube 7. When filter medium is washed, the selector valve is switched to washing water discharge side so as to supply washing water (raw water may be used) through the same path as used for filtering the raw water indicated with the dotted line in the respective drawings from the raw water inflow tube 5 and then, washing water is made to flow into the drum 3 continuously.

Further, the filtrated water outflow portion 6 having the strainer S shown in FIG. 5 is rotated or the agitating means is driven or the drum 3 is driven with a driving means or the like. As a result, granular filter medium is agitated or the drum 3 is rotated, so that the granular filter medium within the filter bed 1 begins to collapse because its angle becomes larger than an angle of repose and the granular filter mediums rub with each other, as shown in FIG 2. Consequently, contaminant adhering to the filter medium can be released or removed and at the same time, the granular filter medium rubs with the strainer S or substantially flat plane like filter net 15 provided within the drum 3, thereby releasing or removing contaminant adhering to the strainer S or substantially flat plane like filter net 15. Consequently, the amount of washing water can be reduced remarkably as compared to the conventional filter. Then, the released and removed contaminant is discharged from the drain port 37 through a washing water passage indicated with a dotted-line arrow in the respective figures.

Therefore, in the filter medium of this filter, the granular filter medium is rubbed with the substantially flat plane like filter net provided in the drum 3 so as to release contaminant adhering to the filter net and the granular filter mediums rub with each other so as to release the contaminant adhering to the filter medium and then, washing water flows in from the raw water inflow portion 4 in the filter bed 1. Filtration is carried out substantially completely by this synergetic effect. Then, the driving of the drum 3 and the agitating means is stopped to a shut-down state and preferably, by pouring washing water, the inside of the filter bed 1 is washed so as to clean the filter mediums and after that, this is used as the normal filter for a predetermined time interval. If the rotation of the drum 3 is stopped at a position in which no filter medium exists on the lid or at a position which allows the lid to be removed, the lid can be removed without fall-out of any filter medium, thereby facilitating replacement of the filter medium. Further, installation of various sandproof means blocks filter medium from invading the bearing of a flow tube supporting the rotation, thereby ensuring a long-term usage and facilitating maintenance.

An upper layer with respect to flow of raw water is formed so as to have a small specific gravity and large grading while lower layers are formed so as to have a larger specific gravity as it goes down successively and a smaller grading. That is, depending on a treatment purpose, a single grading, a single specific gravity and a single characteristic of the filer medium are used or the combined grading, combined specific gravity, and combined characteristics are used so as to form multi-layers, so that contaminant catching amount per unit filter area and unit filter volume is increased. As a result, the treatment amount of raw water can be increased and treated water having an excellent quality can be secured continuously. Consequently, the filter medium does not have to be replaced and the filter medium which hold no deposit can reduce the amount of the washing water and even if the grading of the filter medium is decreased, it can be used as filter medium for lower layer, thereby increasing reproduction ratio of the filter medium. Further, the filter bed 1 can be formed in a compact fashion.

Further, even if contaminant adhering to the filter medium is progressively hardened due to electrodeposition or fixing or high adhesive bonding at the time of filtering or a long-term no-usage, filtering performance can be restored reliably without formation of any water groove, which is generated in the filter bed 1 and through which raw water flows easily, or mud ball or the like. Further, because the partition nets 15a for separating the respective filter mediums are imposed in the multiple-layers of the filter bed 1, the filter mediums are prevented from being mixed with each other, so that the filter bed 1 corresponding to a treatment purpose can be maintained, thereby improving the treatment efficiency. As for washing of the respective filter mediums in the filter bed 1 composed of multi-layers, if the partition net 15a does not exist on a topmost layer, the filter mediums rub with the partition net 15a just under the respective filter mediums when the drum 3 rotates or swings, so that contaminant adhering to this partition net 15a is released and at the same time, the granular filter mediums rub with each other, so that contaminant adhering to the granular filter mediums is released. Further, the granular filter medium on the topmost layer in the filter bed 1 comes to have an angle larger than the angle of repose so that it collapses. Consequently, contaminant adhering to the filter medium is released. Their operations are the same as that of the previously descried filter.

On the other hand, in case of a filter having the partition net 15a above the filter medium on the topmost layer in the filter bed 1, if the drum 3 rotates or swings, the respective filter mediums, which are located between the partition nets, rub with the partition net 15a just under the respective filter mediums so as to release contaminant adhering to the partition net 15a and at the same time, the granular filter mediums rub with each other, so that contaminant adhering to the filter mediums is released and that filter medium is restored. In the case of the filter where the filter nets are disposed so as to make the respective filter mediums remain thereon with a space above and the raw water inflow tube 5 capable of being changed over to the raw water inflow portion, the wastewater drain portion or the washing water discharge portion is located in this space so as to make it possible washing with the raw water and back washing shown in FIG. 19, the respective filter mediums can be washed with washing water from below the respective partition nets 15a. Additionally, forward washing needs nothing but washing water without any pressure and a water amount necessary for it is only 20-35% of the conventional stationary type filter, so that the reproduction ratio of washing water can be improved and drainage can be reduced largely.

### INDUSTRIAL APPLICABILITY

According to the invention of claim 1, there is provided a filter medium washing method for a filter including a filter having a rotatable or swingable horizontal drum in which raw water is purified by passing through filter medium in the drum. In this filter, by washing the filter medium with raw water or washing water while the filter mediums in the drum are rubbed with each other by rotating or swinging the drum, contaminant adhering to the filter medium is released or the contaminant released from the filter medium is discharged out of the drum, thereby restoring filtering performance of the filter medium effectively.

According to the invention of claim 2, there is provided a filter including a rotatable or swingable horizontal drum in which filter bed and space portion are formed vertically inside, a raw water inflow tube which is inserted into the space portion from an axial portion of the drum while a raw water inflow portion is located in the space portion and a filtrated water outflow tube which is inserted into the space portion from the axial portion of the drum while the filtrated water outflow portion is located in a filter bed. In this filter, a raw water inflow tube supporting the drum and a filtrated water outflow tube having a selector valve capable of switching between treated water and drainage are further provided. Therefore, a selector valve structure (for example, switching from a five-way valve to a three-way valve) and pipe arrangement can be constructed easily thereby achieving reduction of the size of the apparatus and reducing manufacturing cost largely.

According to the invention of claim 3, there is provided a filter including a rotatable or swingable horizontal drum in which filter bed and space portion are formed vertically inside, a raw water inflow tube which is inserted into the space portion from an axial portion of the drum while a raw water inflow portion is located in the space portion and a filtrated water outflow tube which is inserted into the space portion from the axial portion of the drum while the filtrated water outflow portion is located in a filter bed. In this filter, a single or multiple filter mediums are formed in the form of a single layer or multiple layers by selecting the grading, specific gravity, characteristics and the like of the filter medium depending on a treatment purpose. Consequently, for example, filter mediums of upper layers with respect to a flow of raw water are provided with a small specific gravity and large grading while those of lower layers are provided with larger specific gravities and smaller grading, thereby forming multi-layer filter mediums in the filter bed. Consequently, by increasing the contaminant catching amount per unit filter area and unit filter volume depending on a treatment purpose, treatment amount of the raw water can be increased and excellent quality of treated water can be maintained. The filter medium does not have to be replaced and the filter medium which holds no deposit can reduce the amount of the washing water and even if the grading of the filter medium is decreased, it can be used as filter medium for lower layer, thereby increasing reproduction ratio of the filter medium. Further, the filter bed can be formed in a low height thereby reducing the size of the apparatus. Further, even if contaminant adhering to the filter mediums is progressively hardened due to electrodeposition or fixing or high adhesive bonding or a long-term no-usage, filtering performance can be restored reliably without formation of any water groove or mud ball or the like.

According to the invention of claim 4, the filter medium mentioned in the description of claim 3 is formed of multiple types of filter medium having different specific gravities. Therefore, even if respective filter mediums constituting such multi-layers are mixed in the filter bed, they can be separated to classes according to a difference in specific gravity between respective filter mediums. Therefore, it is possible to provide a filter capable of maintaining filtering treatment depending on a treatment purpose.

According to the invention of claim 5, a partition net for separating respective filter mediums is imposed between the respective filter mediums constituted of multi-layers in the description of claim 3 or 4. Consequently, the respective filter mediums are prevented from being mixed together so that filtration corresponding to a treatment purpose can be maintained, thereby improving treatment efficiency.

According to the invention of claim 6, a space is secured above each partition net so as to allow the respective filter mediums remain in the description of claim 5. Consequently, the respective filter mediums in the filter bed are restored completely so as to equalize the quality of treated water. By rotating or swinging the filter bed under a mechanical force not depending on back washing with pressurized water or washing style and gravitation, granular filter mediums are rubbed with each other or the respective filter medium are rubbed with not only each other but also the partition net, so that the respective filter mediums can be restored more reliably. Further, just washing water without no pressure can achieve the role of the washing water and the amount of washing water for use can be reduced to 20-35% as compared to the conventional stationary type filter. As a result, it is possible to provide a filter in which the reproduction ratio of the used water is improved so as to reduce the usage amounts of tap water and drainage.

According to the invention of claim 7, in the description of any one of claims 3-6, a water tube which is capable of switching between a raw water inflow portion, a wastewater drain portion or washing water discharge portion depending on a requirement is disposed in the space portion or inside the respective filter mediums constituted of multi-layers or above part or all of the filter mediums partitioned with the partition nets and a water tube which is capable of switching between a filtrated water outflow portion, washing water outflow portion or wastewater drain portion depending on a requirement is disposed inside the filter bed or a space between the filter medium and bottom portion of the filter bed. If the filer mediums of multiple layers are formed such that their grading decreases towards the lower layers depending on a treatment purpose, selecting a layer for use for filtration enables adjustment of a filtration speed. Even if the grading of the filter mediums drops due to back washing, washing or the like, they can be reproduced as filter medium for lower layers. Therefore, only filter medium for the topmost layer has to be replenished and because each layer of the filter bed is restored reliably, each filter medium does not have to be replaced. Further, water quality worsening period just after the replacement of the filter medium, which occurs in a conventional filter, can be eliminated and maintenance cost can be reduced largely.

According to the invention of claim 8, in the description of any one of claims 5-7, the partition plate for forming a space is disposed below the partition net for separating the respective filter mediums and communication between respective spaces is achieved through a water pipe. Consequently, by independent filtration through the respective filter mediums, the amount of treated water can be increased thereby the filtering efficiency being increased. Further, repetitive filtration among the respective filter mediums can be executed, so as to achieve precision filtration and filtration corresponding to a treatment purpose.

According to the invention of claim 9, there is provided a filter including a rotatable or swingable horizontal drum in which filter bed and space portion are formed vertically inside, a raw water inflow tube which is inserted into the space portion from an axial portion of the drum while a raw water inflow portion is located in the space portion and a filtrated water outflow tube which is inserted into the space portion from the axial portion of the drum while the filtrated water outflow portion is located in a filter bed. In this filter, the filtrated water outflow tube is connected to an intake port of a pump. Consequently, such an event that contaminant in raw water is destroyed by pump vanes to small particles so that they cannot be caught by the filter medium never occurs, so that contaminant is collected effectively. Further, the filter can be used because the inside of the drum can be depressurized to a negative pressure, its pressure resisting strength can be set lower than a conventional drum and pipe in which internal pressure rises. The thicknesses of drum and pipe material can be reduced or the weights of the drum and pipe can be reduced largely by using plastic for their materials.

According to the invention of claim 10, in the description of any one of claims 2-9, a pipe or a hallow shaft is disposed on one side of the drum while one or two pipes or triple pipes on the same axis are disposed internally on the other side thereof in a condition that they are fixed to one side or both sides of the drum or in a rotary type following the drum such that these pipes are used for the raw water inflow tube, the filtrated water outflow tube, filtrated water pipe or drainage pipe according to requirement. This filter can execute filtration suitable for various purposes.

According to the invention of claim 11 in the description of any one of claims 2-10, a sandproof means is provided in one of the raw water inflow tube, the drainage pipe and filtrated water outflow tube, the double tubes, and the triple tubes, at least on one side of the inside and outside of the drum. Consequently, the filter medium can be blocked from invading the bearing portion supporting the rotation of the drum, maintenance is easy and a long-term usage is ensured.

According to the invention of claim 12, in the description of any one of claims 2-11, the raw water inflow tube or the drainage pipe and the filtrated water outflow tube or the double tubes or the triple tubes are provided with a manual or driven type agitating device or an agitating member which is located inside the drum and rotates integrally with the drum. Consequently, this filter can execute filtration suitable for various purposes and with a higher filtering efficiency more quickly and reliably.

According to the invention of claim 13, in the description of any one of claims 2-12, the filtrated water outflow portion of the filtrated water outflow tube is wound with wire while covered with net in the filter bed, so as to form filter net, this filter net being integrally rotated with the drum. Consequently, during rotation of the filter medium at the time of washing, the net moves on the wire so that the net repeats contraction and expansion thereby cleaning this portion reliably. Thus, this filter can achieve higher filter efficiency.

According to the invention of claim 14, in the description of any one of claims 2-13, the flat plane like filter net is provided in the filter bed, this filter net being rotated integrally with the drum and communicating with the filtrated water outflow portion of the filtrated water outflow tube. Consequently, the durability of the filter medium is improved so as to endure a long-term use and eliminate necessity of maintenance and further, filtering efficiency is improved.

According to the invention of claim 15, in the description of claim 14, there are provided a cleaning means for removing contaminant and an adhesion preventing means for preventing adhesion of contaminant between the filter net such as the sheet-like wedge wire and the inner wall of the drum. Consequently, this filter can filtrate with a high filtering efficiency with a filter net such as the sheet-like wedge wire, the cleaning means and the adhesion preventing means reliably even during a long-term operation.

According to the invention of claim 16, in the description of any one of claims 2-15, there is provided a filter net such as sheet-like wedge wire or the like, which is rotated integrally with the drum and communicates with the raw water inflow tube, whose raw water inflow portion is located in the space portion, within the filter bed, a cleaning means for removing a primary filtering means and contaminant and an adhesion preventing means for preventing adhesion of contaminant are provided between the sheet-like filter net and the inner wall of the drum. Consequently, it is possible to provide a filter capable of performing a filtration with a higher filtering efficiency reliably by primarily filtering raw water.

## Claims

1. A filter medium washing method for a filter having a rotatable or swingable horizontal drum in which raw water is filtrated by passing through filter mediums in the drum, wherein
the filter mediums are washed with raw water or washing water while the filter mediums are rubbed with each other by rotating or swinging the drum.

2. A filter including a rotatable or swingable horizontal drum in which filter bed and space portion are formed vertically inside, a raw water inflow tube which is inserted into the space portion from an axial portion of the drum while a raw water inflow portion is located in the space portion, and a filtrated water outflow tube which is inserted into the space portion from the axial portion of the drum while a filtrated water outflow portion is located in a filter bed, wherein
a raw water inflow tube supporting the drum and a filtrated water outflow tube having a selector valve capable of selecting treated water or drainage are further provided.

3. A filter including a rotatable or swingable horizontal drum in which filter bed and space portion are formed vertically inside, a raw water inflow tube which is inserted into the space portion from an axial portion of the drum while a raw water inflow portion is located in the space portion, and a filtrated water outflow tube which is inserted into the space portion from the axial portion of the drum while a filtrated water outflow portion is located in a filter bed, wherein
a single or multiple filter mediums are formed in the form of a single layer or multiple layers by selecting the grading, specific gravity, characteristics and the like of the filter medium depending on a treatment purpose.

4. The filter according to according to claim 3, wherein the filter medium is formed of multiple ones having different specific gravities.

5. The filter according to claim 3 or 4, wherein a partition net for separating respective filter mediums is imposed between the respective filter mediums constituted of multi-layers.

6. The filter according to any one of claims 3 to 5, wherein a space is secured above each partition net so as to allow the respective filter mediums to remain.

7. The filter according to any one of claims 3 to 6, wherein a water tube which is capable of switching between a raw water inflow portion, a wastewater drain portion, or washing water discharge portion depending on a requirement is disposed in the space portion, inside the respective filter mediums constituted of multi-layers, or above part or all of the filter mediums partitioned with the partition nets, and a water tube which is capable of switching between a filtrated water outflow portion, washing water inflow portion, or wastewater drain portion depending on a requirement is disposed inside the filter bed, or in a space between the filter medium and bottom portion of the filter bed.

8. The filter according to any one of claims 5 to 7, wherein a partition plate for forming a space is disposed below the partition net for separating the respective filter mediums and communication between respective spaces is achieved through a water pipe.

9. A filter including a rotatable or swingable horizontal drum in which filter bed and space portion are formed vertically inside, a raw water inflow tube which is inserted into the space portion from an axial portion of the drum while a raw water inflow portion is located in the space portion, and a filtrated water outflow tube which is inserted into the space portion from the axial portion of the drum while a filtrated water outflow portion is located in a filter bed, wherein
the filtrated water outflow tube is connected to an intake port of a pump.

10. The filter according to any one of claims 2 to 9, wherein a pipe or a solid shaft is disposed on one side of the drum while one or two pipes or triple pipes on the same axis are disposed internally on the other side thereof, in a condition that they are fixed to both sides or one side of the drum or in a rotary type following the drum, such that these pipes are used as the raw water inflow tube, the filtrated water outflow tube, filtrated water pipe, or drainage pipe according to requirement.

11. The filter according to any one of claims 2 to 10, wherein a sandproof means is provided in one of the raw water inflow tube, the drainage pipe and filtrated water outflow tube, the double tubes, and the triple tubes, at least on one side of the inside and outside the drum.

12. The filter according to any one of claims 2 to 11, wherein the raw water inflow tube, the drainage pipe and filtrated water outflow tube, the double tubes, or the triple tubes are provided with a manual or driven type agitating device or an agitating member which is located inside the drum and rotates integrally with the drum.

13. The filter according to any one of claims 2 to 12, wherein the filtrated water outflow portion of the filtrated water outflow tube is wound with wire while covered with net in the filter bed, so as to form filter net, this filter net being rotated integrally with the drum.

14. The filter according to any one of claims 2 to 13, wherein a plate-like filter net is provided in the filter bed, this filter net being rotated integrally with the drum and communicating with the filtrated water outflow portion of the filtrated water outflow tube.

15. The filter according to claim 14, wherein a cleaning means for removing contaminant and an adhesion preventing means for preventing adhesion of contaminant between the filter net such as a plate-like wedge wire or the like and the inner wall of the drum.

16. The filter according to any one of claims 2 to 15, wherein a plate-like filter net, such as a plate-like wedge wire or the like, which is rotated integrally with the drum and communicates with the raw water inflow tube, whose raw water inflow portion is located in the space portion, is provided within the filter bed, a cleaning means for removing a primary filtering means and contaminant, and an adhesion preventing means for preventing adhesion of contaminant are provided between the plate-like filter net and the inner wall of the drum.
